# EUROPÄISCHE PATENTSCHRIFT

(11) **EP 3 089 938 B1**
(45) Veröffentlichungstag und Bekanntmachung des Hinweises auf die Patenterteilung: **25.07.2018**
(21) Anmeldenummer: 14827749.4
(22) Anmeldetag: 19.12.2014
(51) Int. Cl.: C01B 9/04, C01D 15/04, C01G 9/04

(54) **VERFAHREN ZUR HERSTELLUNG VON ZINKBROMID UND LITHIUMBROMID ENTHALTENDEN APROTISCHEN LÖSUNGEN**
METHOD FOR PRODUCING APROTIC SOLUTIONS THAT CONTAIN ZINC BROMIDE AND LITHIUM BROMIDE
PROCÉDÉ DE PRÉPARATION DE SOLUTIONS APROTIQUES CONTENANT DU BROMURE DE ZINC ET DU BROMURE DE LITHIUM

(30) Priorität: 03.01.2014 DE 102014200007
(43) Veröffentlichungstag der Anmeldung: 09.11.2016
(73) Patentinhaber: Albemarle Germany GmbH, 65926 Frankfurt am Main (DE)
(72) Erfinder: RITTMEYER, Peter, 65843 Sulzbach/Taunus (DE); WILLEMS, Johannes, 60489 Frankfurt (DE); HAUK, Dieter, 61169 Friedberg (DE); LISCHKA, Uwe, 60437 Frankfurt am Main (DE); KIEFER, Florian, 38640 Goslar (DE); DAWIDOWSKI, Dirk, 61169 Friedberg (DE)
(74) Vertreter: Rottmayer, Hans
(86) Internationale Anmeldenummer: PCT/EP2014/078757
(87) Internationale Veröffentlichungsnummer: WO 2015/101524

(56) Entgegenhaltungen:
- EP-A2- 1 380 539
- WO-A1-00/29329
- WO-A1-2004/007371
- DE-A1-102011 005 499
- Dieter M. M. Rohe ET AL: "Zinc Compounds" In: "Ullmann's Encyclopedia of Industrial Chemistry", 15. Juni 2000 (2000-06-15), Wiley-VCH Verlag GmbH & Co. KGaA, Weinheim, Germany, XP055186372, ISBN: 978-3-52-730673-2 DOI: 10.1002/14356007.a28_537, Seite 748, Absatz 1.3
- "Zink" In: "Gmelins Handbuch der Anorganischen Chemie", 1. Januar 1956 (1956-01-01), Verlag Chemie, Gmbh., XP055186421, Seite 885, Seite 885
- "Lithium" In: "Gmelins Handbuch der Anorganischen Chemie", 1. Januar 1960 (1960-01-01), Verlag Chemie, Gmbh., XP055186417, Seite 410, Seite 410
- "Lithium Bromide" In: "Ullmann's Encyclopedia of Industrial Chemistry, Volume A15", 1. Januar 1990 (1990-01-01), VCH Verlagsgesellschaft mbH, XP055186438, Seite 407, Seite 407

## Beschreibung

Zink-organische Verbindungen spielen in der organischen Synthese eine zunehmend wichtige Rolle bei der Herstellung von Pharmazeutika, Agrochemikalien und anderen Feinchemikalien. Sie sind, vor allem wegen ihrer guten Kompatibilität mit einer Vielzahl funktioneller Gruppen, wichtige Intermediate in der organischen Chemie. Neben der direkten Insertion von Zn-Metall in organische Halogenide können sie durch Ummetallierung von Li- oder Mg-organischen Verbindungen hergestellt werden. In speziellen Fällen erlaubt eine Ummetallierung einer Li-organischen Verbindung mit einer Lösung von ZnBr₂ und LiBr in z.B. Dibutylether spezielle Transformationen wie z.B. die stereoselektive C-Glykosylierung von Arylzink Reagentien (S. Lemaire, I.N. Houpis, T. Xiao, J.Li, E. Digard, C. Gozlan, R. Liu, A. Gavryushin, C. Diene, Y. Wang, V. Farina and P. Knochel, Org. Lett, 2012, 14, 1480 - 1483).

Zinkbromid und Lithiumbromid werden durch Umsetzung von günstigen Rohstoffen wie Zinkoxid, Zinkcarbonat, Zn-Metall, Lithiumhydroxid oder Lithiumcarbonat mit Bromwasserstoffsäure im wässrigen Medium hergestellt. Die festen Salze erhält man durch Kristallisation oder Eindampfen der Reaktionslösungen. Die so hergestellten Feststoffe werden dann in Dibutylether gelöst. WO 2004/007371 A1 offenbart ein Verfahren zur Entfernung von Wasser aus einer Mischung enthaltend Wasser und Zinkchlorid. Die Mischung wird mit einem aprotischen polaren Verdünnungsmittel, wie z.B. Ether, versetzt. Im Falle, dass ein Azeotrop oder Heteroazeotrop mit Wasser gebildet wird, destilliert man die Mischung, enthaltend Wasser, Zinkchlorid und das Verdünnungsmittel, unter Abtrennung von Wasser oder des Azeotrops oder des Heteroazeotrops von dieser Mischung und unter Erhalt einer wasserfreien Mischung, enthaltend Zinkchlorid und das Verdünnungsmittel.

Für die genannten Ummetallierungsreaktionen wird eine möglichst trockene Lösung von Zinkbromid und Lithiumbromid in Dibutylether benötigt. Um die Feststoffe entsprechend wasserfrei herzustellen werden lange Trocknungszeiten und/oder hohe Trocknungstemperaturen benötigt. Nach der Trocknung müssen die Feststoffe unter Feuchtigkeitsausschluß verpackt und ebenfalls unter Feuchtigkeitsausschluß in Dibutylether verlöst werden.

Es wäre daher wünschenswert Zinkbromid und Lithiumbromid aus günstigen Rohstoffen direkt im gewünschten Lösungsmittel Dibutylether herzustellen. Dabei sollte direkt eine wasserfreie Lösung entstehen, oder ggf. gebildetes Reaktionswasser sollte sich einfach aus dem System entfernen lassen.

Ziel der Erfindung ist es, eine wirtschaftliche Synthese einer Lösung von ZnBr₂ und LiBr in aprotischen Lösemiteln zur Verfügung zu stellen. Da die bei der Anwendung eingesetzten und gebildeten metallorganischen Verbindungen schnell und vollständig mit Wasser reagieren und somit die Ausbeute der Umsetzung verringern, sollte die eingesetzte Lösung von ZnBr₂/LiBr in Dibutylether einen möglichst geringen Wassergehalt aufweisen.

Erfindungsgemäß wird das Verfahren zur Herstellung Zinkbromid und Lithiumbromid enthaltender aprotischer Lösungen gemäß den beigefügten Ansprüchen durchgeführt. Das Verfahren zur Herstellung Zinkbromid und Lithiumbromid enthaltender aprotischer Lösungen kann in der Weise durchgeführt werden, dass wässrige Lösungen von Zinkbromid und Lithiumbromid im stöchiometrischen Verhälnis gemischt und mit einer solchen Menge eines Ethers versetzt werden, dass das vorhandene Wasser azeotrop entfernt und eine Produktlösung mit einem Restwassergehalt < 2500 ppm erhalten wird. Alternativ kann das Verfahren erfindungsgemäß durchgeführt werden, indem als Edukte Zinkoxid oder Zinkkarbonat und Lithiumkarbonat oder Lithiumhydroxid in einem aprotischen Lösemittel dispergiert und mit wässriger Bromwasserstoffsäure (HBr) in einem Ether umgesetzt, das entstehende Wasser azeotrop entfernt und die Produktlösung von den nicht umgesetzten Edukten abgetrennt wird. Überraschender Weise reagiert eine Suspension der Edukte (ZnO, Li₂CO₃) in einem organischen "Nichtlösungmittel" mit wässriger HBr zu den gewünschten Produkten. Dabei kann schon bei einer Temperatur von maximal 145°C bei Normaldruck das Wasser bis zu Restgehalten von 1200 bis 100 ppm aus dem Reaktionsgemisch entfernt werden. Durch Erniedrigung des Druckes bei der azeotropnen Destillation kann die erforderliche Temperatur noch weiter gesenkt werden. Erfahrungsgemäß werden für die Trocknung einer wässrigen LiBr-Lösung z.B. mindestens 180°C und ein gutes Vakuum benötigt. Das erfindungsgemäße Verfahren gestattet den Einsatz günstiger Edukte wie Zinkoxid, Zinkkarbonat, Zinkmetall, sowie Lithiumkarbonat oder Lithiumhydroxid. Diese werden in Dibutylether suspendiert und durch Zugabe von wässriger Bromwasserstoffsäure in ihre Bromide überführt. Dibutylether und Wasser bilden ein bei 95°C siedendes Azeotrop, sodass das mit der Bromwasserstoffsäure eingetragene, sowie das bei der Reaktion entstandene Wasser anschließend per azeotroper Destillation entfernt werden kann. Die gewünschte Produktlösung wird in einem Eintopfverfahren aus günstigen Rohstoffen hergestellt, ohne dass die hygroskopischen und korrosiven Feststoffe zunächst isoliert, verpackt, transportiert und in Dibutylether verlöst werden müssen.

Alternativ kann das Verfahren erfindungsgemäß durchgeführt werden, indem als Edukte ein Gemisch von metallischen Zink und metallischem Lithium in Ether dispergiert und mit elementarem Brom umgesetzt und die Produktlösung von den nicht umgesetzten Edukten abgetrennt wird oder in dem als Edukte ein Gemisch von metallischen Zink und metallischem Lithium in einem Ether dispergiert und mit Bromwasserstoff umgesetzt und die Produktlösung von den nicht umgesetzten Edukten abgetrennt wird. LiBr ist in Dibutylether nahezu unlöslich. Überraschender Weise lagert sich dieses unlösliche LiBr nicht auf der Metalloberfläche ab und verhindert somit nicht eine weitere Reaktion. Es wurde gefunden, dass sogar Li-Metall-Abformungen mit einer kleineren Oberfläche wie z.B. Li-Granulat quantitativ abreagieren.

Eine mögliche wissenschaftliche Erklärung könnte darin bestehen, dass im gewählten Reaktionsmedium Li und Zn mit ähnlichen Reaktionsgeschwindigkeiten mit Br₂ bzw. HBr reagieren und sich ein in Dibutylether löslicher 1 : X-Komplex von LiBr:ZnBr₂ bilden kann, bevor die Oberfläche des Metalls durch unlösliches LiBr blockiert wird, wobei X eine Zahl > 1 ist.

Überraschender Weise löst sich gasförmiges, trockenes HBr soweit im Reaktionsmedium Dibutylether, dass es für eine Reaktion mit den Metallen in hinreichender Konzentration zur Verfügung steht. Als Ether werden ein aliphatischer Ether der allgemeinen Formel R¹-O-R² mit R¹ und R² gleich einem Alkylrest mit 1 bis 10 Kohlenstoffatomen eingesetzt. Ganz besonders bevorzugt wird Dibutylether eingesetzt.

Vorteilhafter Weise werden das Zink pulverförmig mit einer mittleren Partikelgröße von 20 bis 600 µm und das Lithium als Granulat mit einer mittleren Partikelgröße von 1 bis 3 mm eingesetzt. Die Metalle Zink und Lithium können sowohl als gröbere Stücke, als auch als feines Pulver eingesetzt werden.

Das erfindungsgemäße Verfahren wird im Temperaturbereich von -20 bis 100°C besonders bevorzugt im Temperaturbereich von 0 bis 40°C durchgeführt.

Die Erfindung wird nachfolgend an Hand von drei Beispielen genauer erläutert ohne das dadurch die Erfindung auf diese Beispiele beschränkt ist.

### Beispiel 1

In einem 0,5l Doppelmantelreaktor werden 220 g Dibutylether vorgelegt. In diesem Lösungsmittel werden bei Raumtemperatur 30,7 g (377 mmol) Zinkoxid und 13,7 g (185,4 mmol) Lithiumkarbonat suspendiert. Über einen Tropftrichter werden 187 g wässrige Bromwasserstoffsäure (48,5 %-ig = 1121 mmol HBr) über einen Zeitraum von 30 Minuten zudosiert. In einer exothermen Reaktion entsteht (unter CO₂-Entwicklung) Zinkbromid und Lithiumbromid. Am Ende der Reaktion liegen im Reaktionskolben zwei klare, farblose flüssige Phasen vor. Das in der Reaktionsmischung vorhandene Wasser wird durch azeotrope Destillation entfernt. Dabei wird die Manteltemperatur des Doppelmantelreaktors schrittweise von 130°C auf 180°C erhöht. Zunächst wird Wasser schnell entfernt. Mit zunehmender Menge an abgeschiedenem Wasser nimmt jedoch die Geschwindigkeit deutlich ab. Nach ca. 8 Stunden ist die Wasserabscheidung beendet, die Reaktionslösung weist einen Siedepunkt von 144 - 145°C auf.

Analyse der Reaktionslösung:

| | |
|---|---|
| Zn | 1,2 mmol/g |
| Li | 1,2 mmol/g |
| Br | 3,6 mmol/g |
| H₂O | 500 ppm |

### Beispiel 2

In einem 0,5 I Doppelmantelreaktor werden 220 g Dibutylether, 2,62 g (375,7 mmol) Lithium-Granulat und 25,15 g (384 mmol) Zn-Pulver vorgelegt. Über einen Tropftrichter werden 89,95 g (563,6 mmol) elementares Brom innerhalb von 80 Minuten zudosiert. Die Reaktionstemperatur der exothermen Reaktion wird durch Kühlen auf ca. 25°C begrenzt. Man läßt noch 2 Stunden bei 25°C nachreagieren. Die beiden Metalle lösen sich nahezu vollständig auf. Die braun/rote Produktlösung wird durch Abdekantieren vom überschüssigen Metall isoliert.

Analyse der Produktlösung:

| | |
|---|---|
| H₂O | 700 ppm |

### Beispiel 3

In einem 0,5 l Doppelmantelreaktor werden 175 g Dibutylether, 2,1 g (330,5 mmol) Lithium-Granulat und 20,6 g (315 mmol) Zn-Pulver vorgelegt. Aus einer Druckgasflasche werden 73,5 g (908 mmol) gasförmiges HBr in die Reaktionslösung eingeleitet. Der Reaktionsbeginn lässt sich am Temperaturabstieg sowie an der einsetzenden Gasentwicklung (Wasserstoff) erkennen. Die Einleitzeit von HBr beträgt ca. 90 Minuten, die Reaktionstemperatur wird durch Kühlen des Doppelmantels auf ca. 25°C begrenzt. Zur Vervollständigung der Umsetzung wird nach beendeter Zugabe noch kurz auf 45°C erwärmt. Überschüssiges Metall kann leicht durch Filtration über eine Schlenk-Fritte entfernt werden. Als Reaktionsprodukt erhält man eine wasserklare, farblose Lösung.

| | |
|---|---|
| Zn | 1,12 mmol/g |
| Li | 0,98 mmol/g |
| Br | 3,12 mmol/g |
| H₂O | 2200 ppm |

### Beispiel 4

In einem 0,5l Doppelmantelreaktor mit Wasserabscheider werden 186 g Dibutylether vorgelegt und bei 350 mbar zum Sieden erhitzt (Siedetemperatur ca. 105°C). Über einen Zeitraum von ca. 5 Stunden werden kontinuierlich 238g einer wässrigen Lösung von ZnBr₂ und LiBr (12,2% LiBr, 34,2% ZnBr₂) zudosiert. Das Wasser wird dabei kontinuierlich durch azeotrope Destillation aus dem System entfernt. Nach Beendigung der Dosierung wird weiter am Rückfluß gekocht, bis sich kein Wasser mehr abscheidet.

| | |
|---|---|
| Zn | 1,2 mmol/g |
| Li | 1,1 mmol/g |
| H₂O | 700 ppm |

## Patentansprüche

1. Verfahren zur Herstellung Zinkbromid und Lithiumbromid enthaltender aprotischer Lösungen, **dadurch gekennzeichnet, dass**
a) als Edukte Zinkoxid oder Zinkkarbonat und Lithiumkarbonat oder Lithiumhydroxid in einem Ether dispergiert und mit wässriger Bromwasserstoffsäure umgesetzt werden, wobei die Umsetzung der Edukte zu dem Produkt als Eintopfreaktion durchgeführt, das entstehende Wasser azeotrop entfernt und die Produktlösung von den nicht umgesetzten Edukten abgetrennt sowie eine Produktlösung mit einem Restwassergehalt < 2500 ppm erhalten wird oder
b) als Edukte ein Gemisch von metallischen Zink und metallischem Lithium in einem Ether dispergiert und mit elementarem Brom oder mit Bromwasserstoff umgesetzt und die Produktlösung von den nicht umgesetzten Edukten abgetrennt sowie eine Produktlösung mit einem Restwassergehalt < 2500 ppm erhalten wird oder
c) dass wässrige Lösungen von Zinkbromid und Lithiumbromid im stöchiometrischen Verhälnis gemischt und mit einer solchen Menge eines Ethers versetzt werden, dass das vorhandene Wasser azeotrop entfernt und eine Produktlösung mit einem Restwassergehalt < 2500 ppm erhalten wird,
wobei als Ether gemäß den Varianten a) bis c) ein aliphatischer Ether der allgemeinen Formel R¹-O-R² mit R¹ und R² gleich einem Alkylrest mit 1 bis 10 Kohlenstoffatomen eingesetzt wird.

2. Verfahren nach Anspruch 1, **dadurch gekennzeichnet, dass** Dibutylether eingesetzt wird.

3. Verfahren nach Anspruch 1, **dadurch gekennzeichnet, dass** die Metalle Zink und Lithium sowohl als Pulver als auch als gröbere Stücke eingesetzt werden.

4. Verfahren nach Anspruch 1 bis 3, **dadurch gekennzeichnet, dass** die Umsetzung im Temperaturbereich von -20 bis 100°C durchgeführt wird.

5. Verfahren nach Anspruch 4, **dadurch gekennzeichnet, dass** die Umsetzung im Temperaturbereich von 0 bis 40°C durchgeführt wird.

## Claims

1. A process for producing zinc bromide and lithium bromide containing aprotic solutions, **characterized in that**
a) zinc oxide or zinc carbonate and lithium carbonate or lithium hydroxide, as starting materials, are dispersed in an ether and reacted with aqueous hydrobromic acid, wherein the reaction of the starting materials to the product is carried out as a one-pot reaction, the resulting water is azeotropically removed and the product solution is separated from the unreacted starting materials, and a product solution with a residual water content of < 2500 ppm is obtained or
b) a mixture of metallic zinc and metallic lithium, as starting materials, is dispersed in an ether and reacted with elemental bromine or with hydrogen bromide and the product solution is separated from the unreacted starting materials, and a product solution with a residual water content of < 2500 ppm is obtained,or
c) aqueous solutions of zinc bromide and lithium bromide in the stoichiometric ratio are mixed and an amount of an ether is added such that the water present is azeotropically removed and a product solution with a residual water content of < 2500 ppm is obtained,
wherein, as the ether according to the variants a) to c), an aliphatic ether of the general formula R¹-O-R² is used, wherein R¹ and R² are an alkyl group having 1 to 10 carbon atoms.

2. The process according to Claim 1, **characterized in that** dibutyl ether is used.

3. The method according to Claim 1, **characterized in that** the metals zinc and lithium are used both as powders and as coarser pieces.

4. The method according to Claims 1 to 3, **characterized in that** the reaction is carried out in the temperature range from -20 to 100 °C.

5. The process according to Claim 4, **characterized in that** the reaction is carried out in the temperature range from 0 to 40 °C.

## Revendications

1. Procédé de préparation de solutions aprotiques contenant du bromure de zinc et du bromure de lithium, **caractérisé en ce que**
a) on disperse de l'oxyde de zinc ou du carbonate de zinc et du carbonate de lithium ou de l'hydroxyde de lithium en tant que composants de départ dans un éther et on les fait réagir avec de l'acide bromhydrique aqueux, dans lequel la réaction des composants de départ pour donner le produit est réalisée en tant que réaction en un seul récipient, l'eau qui est obtenue est éliminée de façon azéotrope et la solution de produit est séparée des composants de départ n'ayant pas réagi et une solution de produit présentant une teneur en eau résiduelle < 2500 ppm est obtenue ou
b) on disperse un mélange de zinc métallique et de lithium métallique en tant que composants de départ dans un éther et on les fait réagir avec du brome élémentaire ou avec du bromure d'hydrogène et la solution de produit est séparée des composants de départ n'ayant pas réagi et une solution de produit présentant une teneur en eau résiduelle < 2500 ppm est obtenue, ou
c) des solutions aqueuses de bromure de zinc et de bromure de lithium en un rapport stoechiométrique sont mélangées et sont ajoutées à une quantité d'éther telle que l'eau présente soit éliminée de façon azéotrope et une solution de produit présentant une teneur en eau résiduelle < 2500 ppm est obtenue,
dans lequel on utilise comme éther selon les variantes a) à c), un éther aliphatique de formule générale R¹-O-R² où R¹ et R² correspondent à un radical alkyle ayant 1 à 10 atomes de carbone.

2. Procédé selon la revendication 1, **caractérisé en ce que** l'on utilise du dibutyléther.

3. Procédé selon la revendication 1, **caractérisé en ce que** l'on utilise les métaux zinc et lithium aussi bien sous forme de poudre que sous forme de morceaux plus grossiers.

4. Procédé selon la revendication 1 à 3, **caractérisé en ce que** la réaction est réalisée dans la plage de températures de -20 à 100 °C.

5. Procédé selon la revendication 4, **caractérisé en ce que** la réaction est réalisée dans la plage de températures de 0 à 40 °C.
